# EUROPEAN PATENT SPECIFICATION

(11) **EP 2 938 054 B1**
(45) Date of publication and mention of the grant of the patent: **08.01.2020**
(21) Application number: 15157434.0
(22) Date of filing: 03.03.2015
(51) Int. Cl.: H04M 3/42

(54) **Method, device and system for handling busy line**
Verfahren, Vorrichtung und System zur Handhabung einer besetzten Leitung
Procédé, dispositif et système de gestion de ligne occupée

(30) Priority: 03.04.2014 CN 201410133887
(43) Date of publication of application: 28.10.2015
(73) Proprietor: Xiaomi Inc., Beijing 100085 (CN)
(72) Inventor: Liu, Daokuan, Haidian District (CN); Wang, Bin, Haidian District (CN); Weng, Haibin, Haidian District (CN)
(74) Representative: Robson, Aidan John

(56) References cited:
- EP-A1- 2 403 217
- US-A1- 2007 121 831
- US-A1- 2008 279 358
- US-A1- 2009 225 976
- US-B1- 8 582 745

## Description

### TECHNICAL FIELD

The present disclosure generally relates to a communication field, and more particularly relates to a method, a device and a system for handling a busy line.

### BACKGROUND

A voice communication is a basic function of a terminal such as a smart phone, a panel computer and a PDA (personal digital assistant).

In a process of using the function of the voice communication, a communication line often is busy because two terminals initiate call requests to each other at the same time, and thus the voice communication cannot be conducted normally. For example, when terminal A initiates a call request to terminal B, and terminal B initiates a call request to terminal A, the communication line between terminals A and B may be busy.

In a process of implementing the voice communication, the inventors have found that there are defects as follows, when two terminals initiate call requests to each other at the same time, the communication line is busy. If two terminals repeatedly initiate call requests to each other at the same time many times, the communication line is still busy, such that the two terminals cannot implement the voice communication normally. Alternatively, if the communication line is busy, each of the two terminals waits for a call request initiated by the other terminal, thus bringing a waste of time to users corresponding to the two terminals.

In US 2009/0225976 A1, a system comprising a server and telephone devices may be configured to send a positive response to the server in reply to a call request in order to construct a call established status with a source of the call request. The system enables call handling, via a server, when a first telephone and a second telephone each attempt to connect with the other telephone more or less simultaneously - see also US 2007/121831 A1 (KIM SEONG-GU [KR] ET AL) 31 May 2007.

### SUMMARY

The embodiments of the present disclosure provide a method, a device and a system for handling a busy line, to solve the problem that a line is busy caused by the fact that two terminals initiate call requests to each other at the same time. The invention is described in the claims. The embodiments which do not fall within the scope of the claims are to be interpreted as examples useful for understanding the invention. The technical solutions are as follows.

According to a first aspect of embodiments of the present disclosure, there is provided a method for handling a busy line, comprising:
detecting whether a first terminal initiates a first call request to a second terminal and the second terminal initiates a second call request to the first terminal;
connecting the first terminal with the second terminal, or disregarding the first call
request initiated by the first terminal or the second call request initiated by the second terminal, if it is detected that the first terminal initiates the first call request to the second terminal and the second terminal initiates the second call request to the first terminal.

Alternatively, detecting whether a first terminal initiates a first call request to a second terminal and the second terminal initiates a second call request to the first terminal comprises:
detecting whether a number in the first call request initiated by the first terminal is a number of the second terminal and a number in the second call request initiated by the second terminal is a number of the first terminal.

Alternatively, disregarding the first call request initiated by the first terminal or the second call request initiated by the second terminal comprises:
determining between the first call request and the second call request whose initiating time is later according to the initiating time of the first call request and the initiating time of the second call request;
disregarding the call request whose initiating time is later.

Further, the method comprises:
after the first call request initiated by the first terminal is disregarded, sending a disregarding indicating message to the first terminal, in which the disregarding indicating message is used for indicating the first terminal does not continue initiating the first call request; or
after the second call request initiated by the second terminal is disregarded, sending a disregarding indicating message to the second terminal, in which the disregarding indicating message is used for indicating the second terminal does not continue initiating the second call request.

According to a second aspect of embodiments of the present disclosure, there is provided a method for handling a busy line, comprising:
sending a number query request when a called terminal is in a busy state;
receiving a feedback on the number query request, in which the feedback is provided according to a call request initiated by the called terminal;
if the feedback indicates the called terminal is calling a terminal, sending a connecting request to a server, in which the connecting request is used for requesting the server to connect the terminal with the called terminal; or sending a disregarding request to the server or the called terminal, in which the disregarding request is used for requesting to disregard the call request initiated by the called terminal.

Alternatively, receiving a feedback on the number query request comprises:
receiving the feedback sent by the server if the number query request is sent to the server, in which the feedback carries a number in the call request initiated by the called terminal; or
receiving the feedback carrying a detect result sent by the server if the number query request is sent to the server, in which the detect result is obtained by the server after detecting whether the number in the call request initiated by the called terminal is a number of the terminal; or
receiving the feedback carrying a detect result sent by the server if the number query request is sent to the called terminal through the server, in which the detect result is obtained by the called terminal after detecting whether the number in the call request initiated by the called terminal is the number of the terminal; or
receiving the feedback sent by the called terminal if the number query request is directly sent to the called terminal, in which the feedback carries the number in the call request initiated by the called terminal; or
receiving the feedback carrying a detect result sent by the called terminal if the number query request is directly sent to the called terminal, in which the detect result is obtained by the server or the called terminal after detecting whether the number in the call request initiated by the called terminal is the number of the terminal.

According to a third aspect of embodiments of the present disclosure, there is provided a method for handling a busy line, comprising:
receiving a number query request sent by a terminal, in which the number query request is sent by the terminal when a called terminal is in a busy state;
sending a feedback to the terminal according to a call request initiated by the called terminal, in which the feedback is used for triggering the terminal to send a connecting request to a server if the feedback indicates that the called terminal is calling the terminal, in which the connecting request is used for requesting the server to connect the terminal with the called terminal; or sending a disregarding request to the server or the called terminal, in which the disregarding request is used for requesting to disregard the call request initiated by the called terminal.

Alternatively, sending a feedback to the terminal according to a call request initiated by the called terminal comprises:
sending a number in the call request initiated by the called terminal by carrying the number in the feedback to the terminal; or
detecting whether the number in the call request initiated by the called terminal is a number of the terminal, and sending a detect result by carrying the detect result in the feedback to the terminal.

Further, the method comprises:
receiving a connecting request sent by the terminal, in which the connecting request is sent to the server by the terminal if the feedback indicates that the called terminal is calling the terminal;
connecting the terminal with the called terminal according to the connecting request.

Alternatively, the method comprises:
receiving a disregarding request sent by the terminal, in which the disregarding request is sent to the server by the terminal if the feedback indicates that the called terminal is calling the terminal;
disregarding the call request initiated by the called terminal according to the disregarding request.

Further, alternatively, the method comprises:
sending a disregarding indicating message to the called terminal after the call request initiated by the called terminal is disregarded, in which the disregarding indicating message is used for indicating the called terminal does not continue initiating the call request.

Alternatively, sending a feedback to the terminal according to a call request initiated by the called terminal comprises:
sending a number in the call request initiated by the terminal by carrying the number in the feedback to the terminal directly or to the terminal through the server; or
detecting whether the number in the call request initiated by the called terminal is a number of the terminal, and sending a detect result by carrying the detect result in the feedback to the terminal or to the terminal through the server.

Further, the method comprises:
receiving a disregarding request sent by the terminal, in which the disregarding request is sent to the called terminal by the terminal if the feedback indicates that the called terminal is calling the terminal;
disregarding the call request according to the disregarding request.

According to a fourth aspect of embodiments of the present disclosure, there is provided a method for handling a busy line, comprising:
receiving a disregarding request sent by the terminal; in which the disregarding request is sent to a called terminal by the terminal if a feedback received by the terminal from a server indicates that the called terminal is calling the terminal, in which the feedback is on a number query request which is sent to the server by the terminal if the called terminal is in a busy state;
disregarding the call request according to the disregarding request.

Alternatively, disregarding the call request according to the disregarding request comprises:
disregarding the call request automatically if the disregarding request is received; or
displaying the disregarding request if the disregarding request is received; receiving a feedback signal on the disregarding request, and disregarding the call request according to the feedback signal.

According to a fifth aspect of embodiments of the present disclosure, there is provided a device for handling a busy line, comprising:
a detecting module configured for detecting whether a first terminal initiates a first call request to a second terminal and the second terminal initiates a second call request to the first terminal;
a processing module configured for connecting the first terminal with the second terminal, or disregarding the first call request initiated by the first terminal or the second call request initiated by the second terminal, if it is detected that the first terminal initiates the first call request to the second terminal and the second terminal initiates the second call request to the first terminal.

Alternatively, the detecting module is further configured for detecting whether a number in the first call request initiated by the first terminal is a number of the second terminal and a number in the second call request initiated by the second terminal is a number of the first terminal.

Alternatively, the processing module comprises:
a determining unit configured for determining between the first call request and the second call request whose initiating time is later according to the initiating time of the first call request and the initiating time of the second call request;
a disregarding unit configured for disregarding the call request whose initiating time is later.

Alternatively, the device further comprises:
a sending module configured for sending a disregarding indicating message to the first terminal after the first call request initiated by the first terminal is disregarded by the processing module, in which the disregarding indicating message is used for indicating the first terminal does not continue initiating the first call request; or
in which the sending module is further configured for sending a disregarding indicating message to the second terminal after the second call request initiated by the second terminal is disregarded by the processing module, in which the disregarding indicating message is used for indicating the second terminal does not continue initiating the second call request.

According to a sixth aspect of embodiments of the present disclosure, there is provided a device for handling a busy line, comprising:
a sending module configured for sending a number query request when a called terminal is in a busy state;
a receiving module configured for receiving a feedback on the number query request, in which the feedback is provided according to a call request initiated by the called terminal;
a connecting requesting module configured for sending a connecting request to a server if the feedback indicates the called terminal is calling a terminal, in which the connecting request is used for requesting the server to connect the terminal with the called terminal; or a disregarding requesting module configured for sending a disregarding request to the server or the called terminal, in which the disregarding request is used for requesting to disregard the call request initiated by the called terminal.

Alternatively, the receiving module is further configured for receiving the feedback sent by the server if the number query request is sent to the server, in which the feedback carries a number in the call request initiated by the called terminal; or
the receiving module is further configured for receiving the feedback carrying a detect result sent by the server if the number query request is sent to the server, in which the detect result is obtained by the server after detecting whether the number in the call request initiated by the called terminal is a number of the terminal; or
the receiving module is further configured for receiving the feedback carrying a detect result sent by the server if the number query request is sent to the called terminal through the server, in which the detect result is obtained by the called terminal after detecting whether the number in the call request initiated by the called terminal is the number of the terminal; or
the receiving module is further configured for receiving the feedback sent by the called terminal if the number query request is directly sent to the called terminal, in which the feedback carries the number in the call request initiated by the called terminal; or
the receiving module is further configured for receiving the feedback carrying a detect result sent by the called terminal if the number query request is directly sent to the called terminal, in which the detect result is obtained by the server or the called terminal after detecting whether the number in the call request initiated by the called terminal is the number of the terminal.

According to a seventh aspect of embodiments of the present disclosure, there is provided a device for handling a busy line, comprising:
a receiving module configured for receiving a number query request sent by a terminal, in which the number query request is sent by the terminal when a called terminal is in a busy state;
a feedback module configured for sending a feedback to the terminal according to a call request initiated by the called terminal, in which the feedback is used for triggering the terminal to send a connecting request to a server if the feedback indicates that the called terminal is calling the terminal, in which the connecting request is used for requesting the server to connect the terminal with the called terminal; or sending a disregarding request to the server or the called terminal, in which the disregarding request is used for requesting to disregard the call request initiated by the called terminal.

Alternatively, the feedback module comprises:
a first feedback unit configured for sending a number in the call request initiated by the called terminal by carrying the number in the feedback to the terminal; or
a second feedback unit configured for detecting whether the number in the call request initiated by the called terminal is a number of the terminal, and sending a detect result by carrying the detect result in the feedback to the terminal.

Alternatively, the device further comprises:
a connecting request receiving module configured for receiving a connecting request sent by the terminal, in which the connecting request is sent to the server by the terminal if the feedback indicates that the called terminal is calling the terminal;
a connecting request processing module configured for connecting the terminal with the called terminal according to the connecting request.

Alternatively, the device further comprises:
a disregarding request receiving module configured for receiving a disregarding request sent by the terminal, in which the disregarding request is sent to the server by the terminal if the feedback indicates that the called terminal is calling the terminal;
a disregarding request processing module configured for disregarding the call request initiated by the called terminal according to the disregarding request.

Alternatively, the device further comprises:
a sending module configured for sending a disregarding indicating message to the called terminal after the call request initiated by the called terminal is disregarded, in which the disregarding indicating message is used for indicating the called terminal does not continue initiating the call request.

Alternatively, the feedback module comprises:
a third feedback unit configured for sending a number in the call request initiated by the terminal by carrying the number in the feedback to the terminal directly or to the terminal through the server; or
a fourth feedback unit configured for detecting whether the number in the call request initiated by the called terminal is a number of the terminal, and sending a detect result by carrying the detect result in the feedback to the terminal or to the terminal through the server.

Further, the disregarding request receiving module is configured for receiving a disregarding request sent by the terminal, in which the disregarding request is sent to the called terminal by the terminal if the feedback indicates that the called terminal is calling the terminal;
the disregarding request processing module is configured for disregarding the call request according to the disregarding request received by the disregarding request receiving module.

According to an eighth aspect of embodiments of the present disclosure, there is provided a device for handling a busy line, comprising:
a receiving module configured for receiving a disregarding request sent by a terminal; in which the disregarding request is sent to a called terminal by the terminal if a feedback received by the terminal from a server indicates that the called terminal is calling the terminal, in which the feedback is on a number query request which is sent to the server by the terminal if the called terminal is in a busy state;
a disregarding module configured for disregarding the call request according to the disregarding request received by the receiving module.

Alternatively, the disregarding module comprises:
a first disregarding unit configured for disregarding the call request automatically if the disregarding request is received; or
a displaying unit configured for displaying the disregarding request if the disregarding request is received; a receiving unit configured for receiving a feedback signal on the disregarding request; a second disregarding unit configured for disregarding the call request according to the feedback signal received by the receiving unit.

According to a ninth aspect of embodiments of the present disclosure, there is provided a device for handling a busy line, comprising:
a processor;
a memory configured for storing executable instructions of the processor;
in which the processor is configured for:
   detecting whether a first terminal initiates a first call request to a second terminal and the second terminal initiates a second call request to the first terminal;
   connecting the first terminal with the second terminal, or disregarding the first call request initiated by the first terminal or the second call request initiated by the second terminal, if it is detected that the first terminal initiates the first call request to the second terminal and the second terminal initiates the second call request to the first terminal.

According to a tenth aspect of embodiments of the present disclosure, there is provided a device for handling a busy line, comprising:
a processor;
a memory configured for storing executable instructions of the processor;
in which the processor is configured for:
   sending a number query request when a called terminal is in a busy state;
   receiving a feedback on the number query request, in which the feedback is provided according to a call request initiated by the called terminal;
   if the feedback indicates the called terminal is calling a terminal, sending a connecting request to a server, in which the connecting request is used for requesting the server to connect the terminal with the called terminal; or sending a disregarding request to the server or the called terminal, in which the disregarding request is used for requesting to disregard the call request initiated by the called terminal.

According to an eleventh aspect of embodiments of the present disclosure, there is provided a device for handling a busy line, comprising:
a processor;
a memory configured for storing executable instructions of the processor;
in which the processor is configured for:
   receiving a number query request sent by a terminal, in which the number query request is sent by the terminal when a called terminal is in a busy state;
   sending a feedback to the terminal according to a call request initiated by the called terminal, in which the feedback is used for triggering the terminal to send a connecting request to a server if the feedback indicates that the called terminal is calling the terminal, in which the connecting request is used for requesting the server to connect the terminal with the called terminal; or sending a disregarding request to the server or the called terminal, in which the disregarding request is used for requesting to disregard the call request initiated by the called terminal.

According to a twelfth aspect of embodiments of the present disclosure, there is provided a device for handling a busy line, comprising:
a processor;
a memory configured for storing executable instructions of the processor;
in which the processor is configured for:
   receiving a disregarding request sent by the terminal; in which the disregarding request is sent to a called terminal by the terminal if a feedback received by the terminal from a server indicates that the called terminal is calling the terminal, in which the feedback is on a number query request which is sent to the server by the terminal if the called terminal is in a busy state;
   disregarding the call request according to the disregarding request.

According to a thirteenth aspect of embodiments of the present disclosure, there is provided a communication system, comprising: a server, a first terminal and a second terminal, the server being connected to the first terminal and the second terminal respectively, in which the server comprises any device for handling a busy line according to the fifth aspect, or the server comprises any device for handling a busy line according to the ninth aspect.

According to a fourteenth aspect of embodiments of the present disclosure, there is provided a communication system, comprising: a server, a first terminal and a second terminal, the server being connected to the first terminal and the second terminal respectively, in which
the first terminal comprises any device for handling a busy line according to the sixth aspect;
the server comprises any device for handling a busy line according to the seventh aspect;
the second terminal comprises any device for handling a busy line according to the eighth aspect; or
the first terminal comprises any device for handling a busy line according to the sixth aspect;
the second terminal comprises any device for handling a busy line according to the seventh aspect; or
the first terminal comprises any device for handling a busy line according to the tenth aspect;
the server comprises any device for handling a busy line according to the eleventh aspect;
the second terminal comprises any device for handling a busy line according to the twelfth aspect.

The technical solution disclosed in the embodiments of the present disclosure can have an advantageous effect as follows:

By detecting whether a first terminal initiates a first call request to a second terminal and the second terminal initiates a second call request to the first terminal, and if it is detected that the first terminal initiates the first call request to the second terminal and the second terminal initiates the second call request to the first terminal, connecting the first terminal with the second terminal or disregarding the first call request initiated by the first terminal or the second call request initiated by the second terminal, the problem that a line is busy caused by the fact that two terminals initiate call requests to each other may be solved, such that if two terminals initiate call requests to each other, a waste of time in calling each other by the two terminals may be avoided by connecting the two terminals by a server or disregarding a call request initiated by one of the two terminals by the server, thus saving time and improving the efficiency.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an operating environment of a method for handling a busy line according to an exemplary embodiment of the present disclosure.
Fig. 2 is a flow chart of a method for handling a busy line according to an exemplary embodiment of the present disclosure.
Fig. 3 is a flow chart of another method for handling a busy line according to an exemplary embodiment of the present disclosure.
Fig. 4 is a flow chart of an alternative method of the another method for handling a busy line according to an exemplary embodiment of the present disclosure.
Fig. 5 is a flow chart of another alternative method of the another method for handling a busy line according to an exemplary embodiment of the present disclosure.
Fig. 6 is a schematic diagram illustrating a process of a method for handling a busy line according to another exemplary embodiment of the present disclosure.
Fig. 7 is a schematic diagram illustrating a process of an alternative method of the method for handling a busy line according to another exemplary embodiment of the present disclosure.
Fig. 8 is a schematic diagram illustrating a process of another alternative method of the method for handling a busy line according to another exemplary embodiment of the present disclosure.
Fig. 9 is a schematic diagram illustrating a process of another method for handling a busy line according to another exemplary embodiment of the present disclosure.
Fig. 10 is a schematic diagram of a terminal according to another exemplary embodiment of the present disclosure.
Fig. 11 is a schematic diagram illustrating a process of yet another method for handling a busy line according to another exemplary embodiment of the present disclosure.
Fig. 12 is a schematic diagram of another called terminal according to another exemplary embodiment of the present disclosure.
Fig. 13 is a schematic diagram illustrating a process of an alternative method of the yet another method for handling a busy line according to another exemplary embodiment of the present disclosure.
Fig. 14 is a schematic diagram of yet another called terminal according to another exemplary embodiment of the present disclosure.
Fig. 15 is a schematic diagram illustrating a process of still another method for handling a busy line according to another exemplary embodiment of the present disclosure.
Fig. 16 is a schematic diagram of another terminal according to another exemplary embodiment of the present disclosure.
Fig. 17 is a schematic diagram of another called terminal according to another exemplary embodiment of the present disclosure.
Fig. 18 is a block diagram of a device for handling a busy line according to an exemplary embodiment of the present disclosure.
Fig. 19 is a block diagram of another device for handling a busy line according to an exemplary embodiment of the present disclosure.
Fig. 20 is a block diagram of a device for handling a busy line according to another exemplary embodiment of the present disclosure.
Fig. 21 is a block diagram of another device for handling a busy line according to another exemplary embodiment of the present disclosure.
Fig. 22 is a block diagram of yet another device for handling a busy line according to another exemplary embodiment of the present disclosure.
Fig. 23 is a block diagram of a device for handling a busy line according to yet another exemplary embodiment of the present disclosure.
Fig. 24 is a block diagram of another device for handling a busy line according to yet another exemplary embodiment of the present disclosure.
Fig. 25 is a block diagram of a device for handling a busy line according to still another exemplary embodiment of the present disclosure.
Fig. 26 is a block diagram of another device for handling a busy line according to still another exemplary embodiment of the present disclosure.
Fig. 27 is a schematic diagram of a server according to an exemplary embodiment of the present disclosure.
Fig. 28 is a schematic diagram of a terminal according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

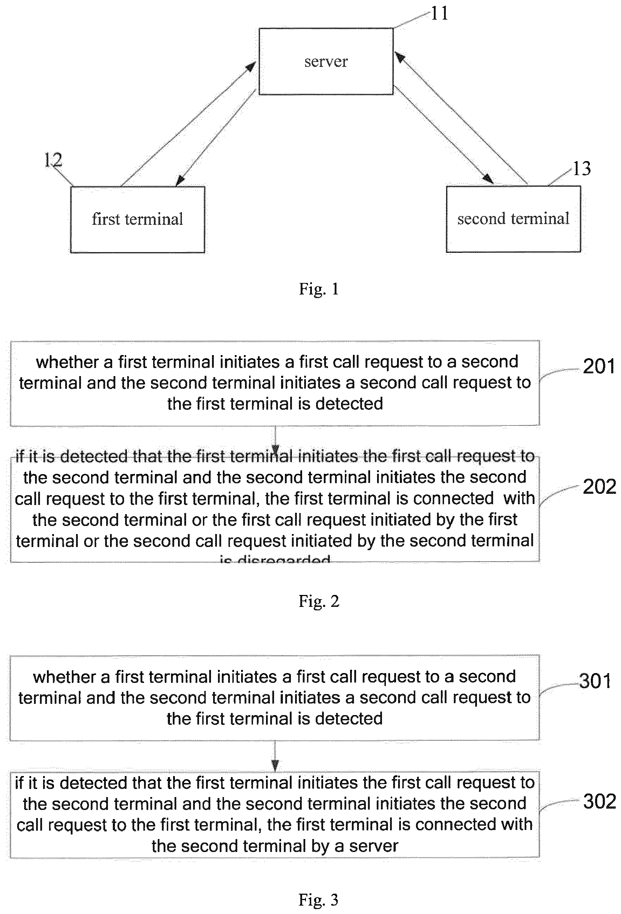

Fig. 1 is a schematic diagram illustrating an operating environment of a method for handling a busy line according to an exemplary embodiment of the present disclosure. In the operating environment, there are a server 11, a first terminal 12 and a second terminal 13. The server 11 is connected to the first terminal 12 and the second terminal 13 respectively.

The server 11 may be a switch, or a server cluster consisting of several servers, or a cloud computation service center. The server 11 is configured for providing communication services to clients.

The first terminal 12 and the second terminal 13 may be a mobile communication equipment, The first terminal 12 and the second terminal 13 may be a mobile phone, a PDA, an electronic book reader, an MP3 (Moving Picture Experts Group Audio Layer III) player, an MP4 (Moving Picture Experts Group Audio Layer IV) player, a laptop portable computer, a desktop computer and so on.

The server 11 may be connected with the first terminal 12 and the second terminal 13 via a wireless or wired network respectively.

Fig. 2 is a flow chart of a method for handling a busy line according to an exemplary embodiment of the present disclosure. In this embodiment, take the method for handling a busy line being applied in the server illustrated in Fig. 1 for example. The method for handling a busy line may include the following steps.

In step 201, whether a first terminal initiates a first call request to a second terminal and the second terminal initiates a second call request to the first terminal is detected.

In step 202, if it is detected that the first terminal initiates the first call request to the second terminal and the second terminal initiates the second call request to the first terminal, the first terminal may be connected with the second terminal, or the first call request initiated by the first terminal or the second call request initiated by the second terminal may be disregarded.

As described above, with the method for handling a busy line according to embodiments of the present disclosure, by detecting whether a first terminal initiates a first call request to a second terminal and the second terminal initiates a second call request to the first terminal, and if it is detected that the first terminal initiates the first call request to the second terminal and the second terminal initiates the second call request to the first terminal, connecting the first terminal with the second terminal or disregarding the first call request initiated by the first terminal or the second call request initiated by the second terminal, the problem that a line is busy caused by the fact that two terminals initiate call requests to each other may be solved, such that if two terminals initiate call requests to each other, a waste of time in calling each other by the two terminals may be avoided by connecting the two terminals by a server or disregarding a call request initiated by one of the two terminals by the server, thus saving time and improving the efficiency.

Fig. 3 is a flow chart of another method for handling a busy line according to an exemplary embodiment of the present disclosure. In this embodiment, take the method for handling a busy line being applied in the server illustrated in Fig. 1 for example. The method for handling a busy line may include the following steps.

In step 301, whether a first terminal initiates a first call request to a second terminal and the second terminal initiates a second call request to the first terminal is detected.

The server detects whether a number in the first call request initiated by the first terminal is a number of the second terminal, and whether a number in the second call request initiated by the second terminal is a number of the first terminal.

In step 302, if it is detected that the first terminal initiates the first call request to the second terminal and the second terminal initiates the second call request to the first terminal, the first terminal is connected with the second terminal.

Based on step 201, if the number called by the first terminal is the number of the second terminal, and the number called by the second terminal is the number of the first terminal, then the server connects terminal A with terminal B.

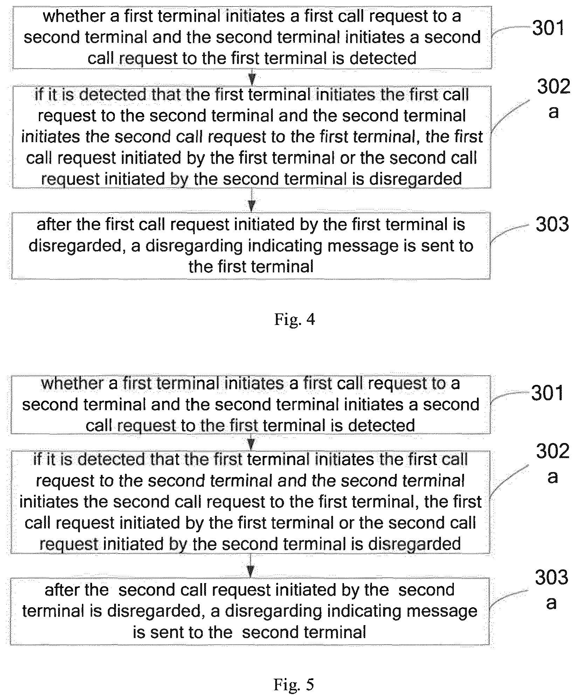

As another possible implementation, referring to Fig. 4, step 302 may be replaced with the following steps.

In step 302a, if it is detected that the first terminal initiates the first call request to the second terminal and the second terminal initiates the second call request to the first terminal, the first call request initiated by the first terminal or the second call request initiated by the second terminal is disregarded.

That is, the first call request initiated by the first terminal or the second call request initiated by the second terminal is disregarded by the server. This step may include the following substeps.

The server determines between the first call request and the second call request whose initiating time is later according to the initiating time of the first call request and the initiating time of the second call request.

For example, if the initiating time of the call request initiated by terminal A is earlier than that of the call request initiated by terminal B, i.e. assuming that terminal A initiates a call request to terminal B at 10:10:10 am and terminal B initiates a call request to terminal A at 10:10:11 am, the server determines that the initiating time of the call request initiated by terminal B is later than that of the call request initiated by terminal A according to the initiating time of the call request initiated by terminal A and the initiating time of the call request initiated by terminal B, and then the server disregards the call request initiated by terminal B. Alternatively, conversely, the server disregards the call request initiated by terminal A.

Further, in step 303, after the first call request initiated by the first terminal is disregarded, a disregarding indicating message is sent to the first terminal by the server. The disregarding indicating message is used for indicating the first terminal dose not continue initiating the first call request.

Assuming that the initiating time of the call request initiated by terminal A to terminal B is later than that of the call request initiated by terminal B to terminal A, based on step 302a, the server disregards the call request initiated by terminal A to terminal B, and sends a disregarding indicating message to terminal A, in which the disregarding indicating message indicates terminal A does not continue initiating the call request to terminal B.

In this way, after the first call request initiated by the first terminal is disregarded, the second terminal may be connected with the first terminal, such that a communication may be conducted under a normal procedure.

As another possible implementation, referring to Fig. 5, step 303 may be replaced with the following step.

In step 303a, after the second call request initiated by the second terminal is disregarded, a disregarding indicating message is sent to the second terminal by the server. The disregarding indicating message is used for indicating the second terminal does not continue initiating the second call request.

In this way, after the second call request initiated by the second terminal is disregarded, the second terminal may be connected with the first terminal, such that a communication may be conducted under a normal procedure.

As described above, with the method for handling a busy line according to embodiments of the present disclosure, a server detects whether a first terminal initiates a first call request to a second terminal and the second terminal initiates a second call request to the first terminal, and if it is detected that the first terminal initiates the first call request to the second terminal and the second terminal initiates the second call request to the first terminal, the server connects the first terminal with the second terminal or disregards the first call request initiated by the first terminal or the second call request initiated by the second terminal. Thus, the problem that a line is busy caused by the fact that two terminals initiate call requests to each other may be solved, such that if two terminals initiate call requests to each other, a waste of time in calling each other by the two terminals may be avoided by connecting the two terminals by the server or disregarding a call request initiated by one of the two terminals by the server, thus saving time and improving the efficiency.

Meanwhile, with the method for handling a busy line according to embodiments of the present disclosure, by disregarding one of the first call request initiated by the first terminal and the second call request initiated by the second terminal and sending a disregarding indicating message to one of the first terminal and the second terminal which initiates the disregarded call request, the effect of preventing a line from being busy in the subsequent calling process and communicating the first terminal with the second terminal normally may be achieved.

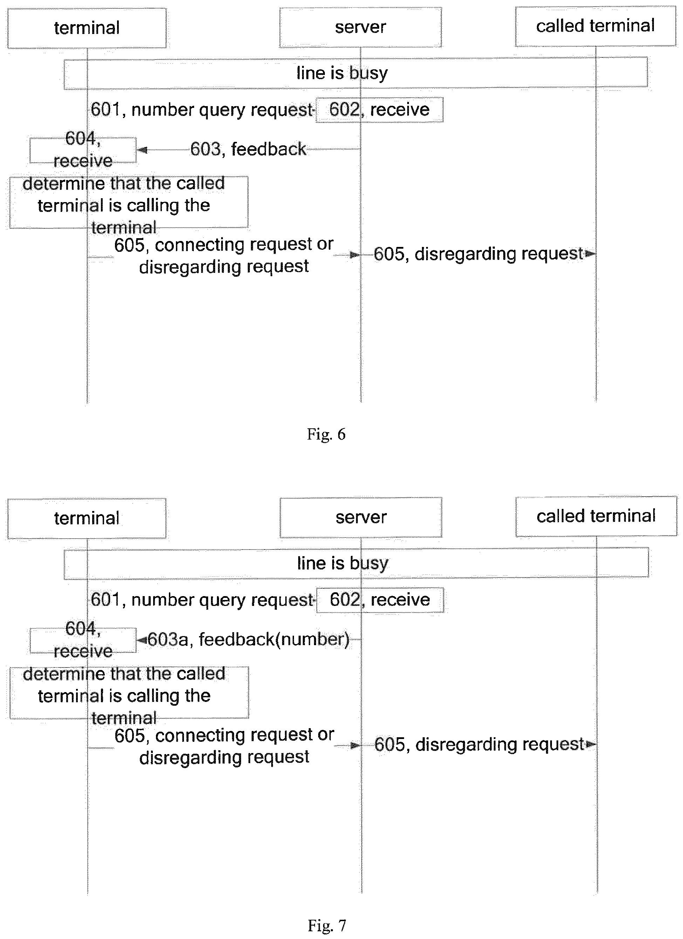

Fig. 6 is a schematic diagram for illustrating a process of a method for handling a busy line according to another exemplary embodiment of the present disclosure. In this embodiment, take the method for handling a busy line being applied in the server illustrated in Fig. 1 for example. The method for handling a busy line may include the following steps.

In step 601, a number query request is sent by a terminal to a server when a called terminal is in a busy state.

Take terminal A as the terminal and terminal B as the called terminal for example. Terminal A and terminal B are mobile communication equipments, or fixed communication equipments.

When terminal B is in a busy state, terminal A sends a number query request to the server.

In step 602, the number query request sent by the terminal is received by the server.

The number query request is sent by the terminal to the server when the called terminal is in a busy state.

In step 603, a feedback is sent by the server to the terminal according to a call request initiated by the called terminal.

This step includes two different implementations.

Firstly, the server sends a number in the call request initiated by the called terminal to the terminal by carrying the number in the feedback, as shown in step 603a illustrated in Fig. 7.

For example, the server sends a number called by terminal B to terminal A by carrying the number in the feedback.

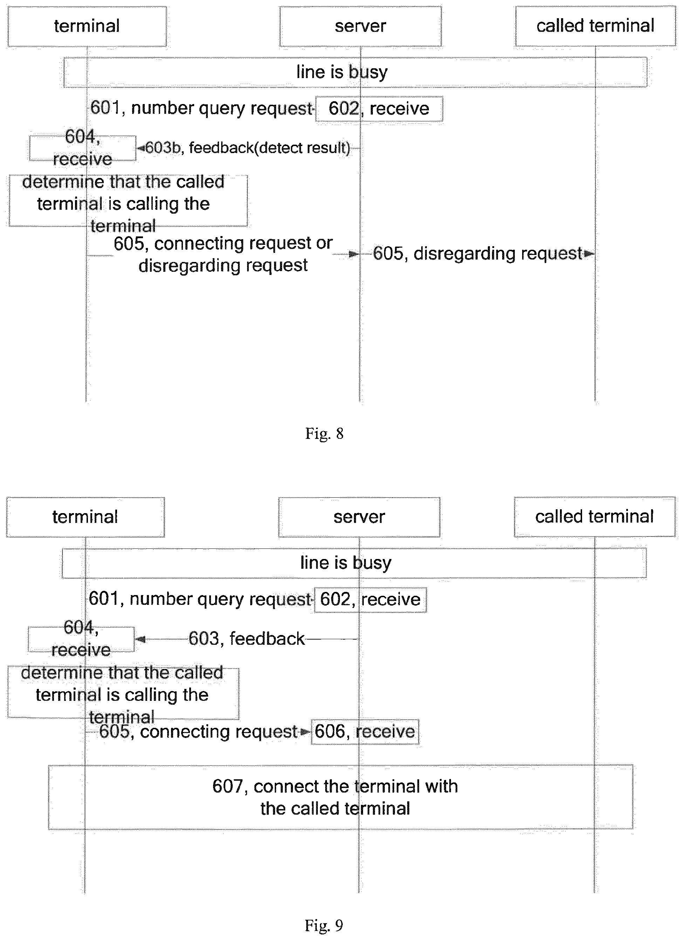

Secondly, the server detects whether the number in the call request initiated by the called terminal is a number of the terminal, and sends a detect result to the terminal by carrying the detect result in the feedback, as shown in step 603b illustrated in Fig. 8.

For example, the server detects whether a number called by terminal B is the number of terminal A, and sends a detect result to terminal A through the feedback.

The second implementation may prevent private information from being leaked from the called terminal.

In step 604, the feedback on the number query request sent by the server is received by the terminal.

Correspondingly, this step includes two different implementations.

Firstly, the terminal receives the feedback sent by the server, and the feedback carries the number in the call request initiated by the called terminal, as shown in Fig. 7.

Secondly, the terminal receives the feedback carrying the detect result sent by the server, the detect result is obtained by the server after detecting whether the number in the call request initiated by the called terminal is the number of the terminal, as shown in Fig. 8.

In step 605, if the feedback indicates that the called terminal is calling the terminal, a connecting request is sent by the terminal to the server, or a disregarding request is sent to the server or the called terminal.

The connecting request is used for requesting the server to connect the terminal with the called terminal.

The disregarding request is used for requesting to disregard the call request initiated by the called terminal.

As described above, with the method for handling a busy line according to embodiments of the present disclosure, a terminal sends a number query request to a server and receives a feedback sent by the server according to the number query request, and then sends a connecting request to the server according to the feedback or sends a disregarding request to disregard a call request initiated by a called terminal so as to establish a communication. Thus, the problem that a line is busy caused by the fact that two terminals initiate call requests to each other may be solved, such that if two terminals initiate call requests to each other, the effect of the two terminals being connected by the server or the call request initiated by the called terminal being disregarded may be achieved.

Fig. 9 is a schematic diagram illustrating a process of another method for handling a busy line according to another exemplary embodiment of the present disclosure. In this embodiment, take the method for handling a busy line being applied in the server illustrated in Fig. 1 for example. The method for handling a busy line may include the following steps.

In step 601, a number query request is sent by a terminal to a server when a called terminal is in a busy state.

Take terminal A as the terminal and terminal B as the called terminal for example. Terminal A and terminal B are mobile communication equipments, or fixed communication equipments.

When terminal B is in a busy state, terminal A sends a number query request for querying the called number of terminal B to the server.

In step 602, the number query request sent by the terminal is received by the server.

The number query request is sent by the terminal to the server if the called terminal is in a busy state.

In step 603, a feedback is sent by the server to the terminal according to a call request initiated by the called terminal.

This step includes two different implementations.

Firstly, the server sends a number in the call request initiated by the called terminal to the terminal by carrying the number in the feedback.

Secondly, the server detects whether the number in the call request initiated by the called terminal is a number of the terminal, and sends a detect result to the terminal by carrying the detect result in the feedback.

In step 604, the feedback on the number query request sent by the server is received by the terminal.

Correspondingly, this step includes two different implementations.

Firstly, the terminal receives the feedback sent by the server, and the feedback carries the number in the call request initiated by the called terminal.

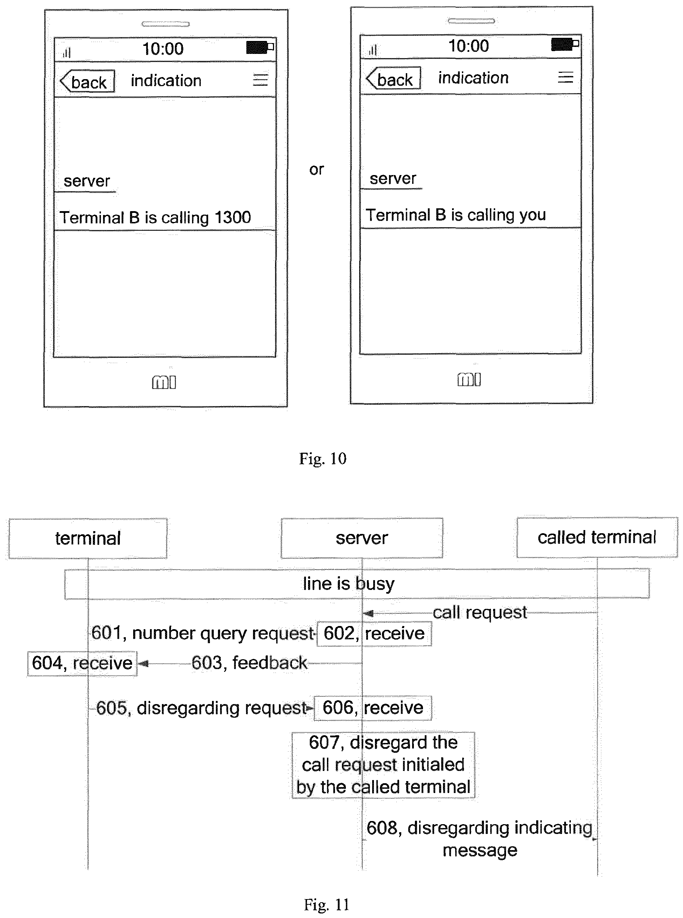

For example, terminal A receives the called number of terminal B sent by the server. Assuming that the number of terminal A is 1300, when the called number of terminal B is the number of terminal A, the feedback from the server received by terminal A indicates: terminal B is calling 1300. The feedback sent by the server is displayed in terminal A, as illustrated on the left of Fig. 10.

Secondly, the terminal receives the feedback carrying a detect result sent by the server, and the detect result is obtained by the server after detecting whether the number in the call request initiated by the called terminal is the number of the terminal.

For example, terminal A receives the feedback carrying a detect result sent by the server. Assuming that the server obtains a detect result by detecting the called number of terminal B, if the detect result indicates that terminal B is calling terminal A, the feedback received by terminal A indicates: terminal B is calling you. The feedback sent by the server is displayed in terminal A, as illustrated on the right of Fig. 10.

In step 605, if the feedback indicates that the called terminal is calling the terminal, a connecting request is sent by the terminal to the server.

The connecting request is used for requesting the server to connect the terminal with the called terminal.

In step 606, the connecting request sent by the terminal is received by the server.

The connecting request is sent by the terminal to the server if the feedback indicates that the called terminal is calling the terminal.

In step 607, the terminal is connected with the called terminal by the server according to the connecting request.

By receiving the connecting request sent by terminal A in step 606, the server connects terminal A with terminal B.

As another implementation, referring to Fig. 11, steps 605 to 607 may be replaced with the following steps.

In step 605a, a disregarding request is sent by the terminal to the server if the feedback indicates that the called terminal is calling the terminal.

The disregarding request is used for requesting the server to disregard the call request initiated by the called terminal.

In step 606a, the disregarding request sent by the terminal is received by the server.

The disregarding request is sent by the terminal to the server if the feedback indicates that the called terminal is calling the terminal.

In step 607a, the call request initiated by the called terminal is disregarded by the server according to the disregarding request.

Alternatively, after step 607a, the method further includes the following steps.

In step 608, a disregarding indicating message is sent by the server to the called terminal.

The disregarding indicating message is used for indicating the called terminal does not continue initiating the call request.

For example, if the call request initiated by terminal B is disregarded by the server, the server sends a disregarding indicating message to terminal B, the disregarding indicating message is displayed in terminal B, a user using terminal B may temporarily stop initiating the call request to terminal A according to the disregarding indicating message. Alternatively, terminal B automatically temporarily stops initiating the call request to terminal A according to the disregarding indicating message.

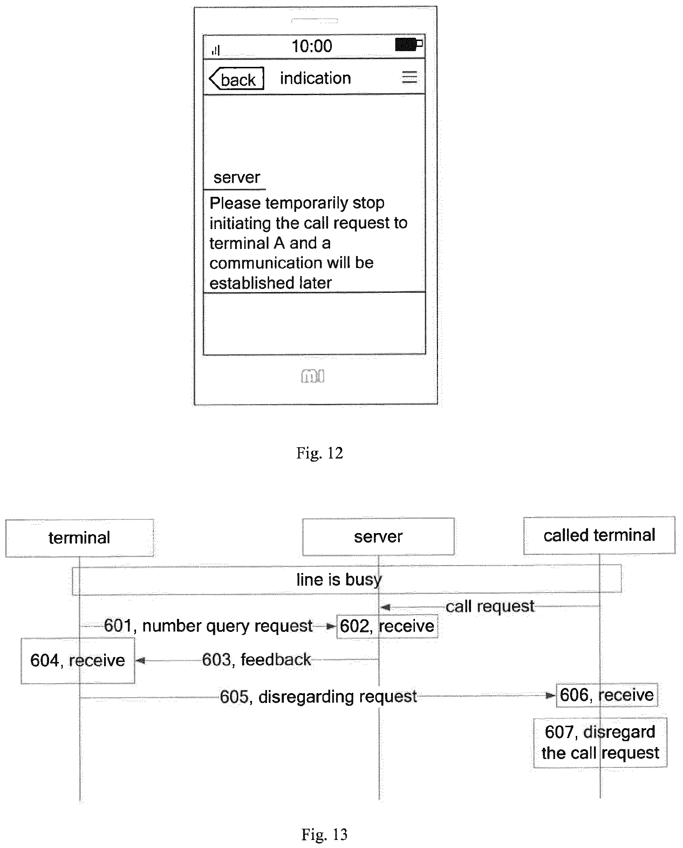

A diagram (i.e. Fig. 12) illustrating a disregarding indicating message being displayed in terminal B is provided in this embodiment. The disregarding indicating message sent by the server is displayed in terminal B, the disregarding indicating message may be a message indicating "Please temporarily stop initiating the call request to terminal A and a communication will be established later", terminal B stops initiating the call request to terminal A according to the disregarding indicating message.

In this way, after the call request initiated by the called terminal is disregarded, the terminal may be connected with the called terminal normally, such that a communication may be conducted under a normal procedure.

As another possible implementation, referring to Fig. 13, steps 605 to 607 may be replaced with the following steps.

In step 605b, a disregarding request is sent by the terminal to the called terminal if the feedback indicates that the called terminal is calling the terminal.

The disregarding request is used for requesting the called terminal to disregard the call request initiated by the called terminal.

In step 606b, the disregarding request sent by the terminal is received by the called terminal.

In step 607b, the call request initiated by the called terminal is disregarded by the called terminal according to the disregarding request.

This step may include two implementations as follows.

Firstly, after the disregarding request is received, the call request is automatically disregarded by the called terminal.

Secondly, after the disregarding request is received, the disregarding request is displayed in the called terminal; a feedback signal on the disregarding request is received from a user, and the call request is disregarded according to the feedback signal.

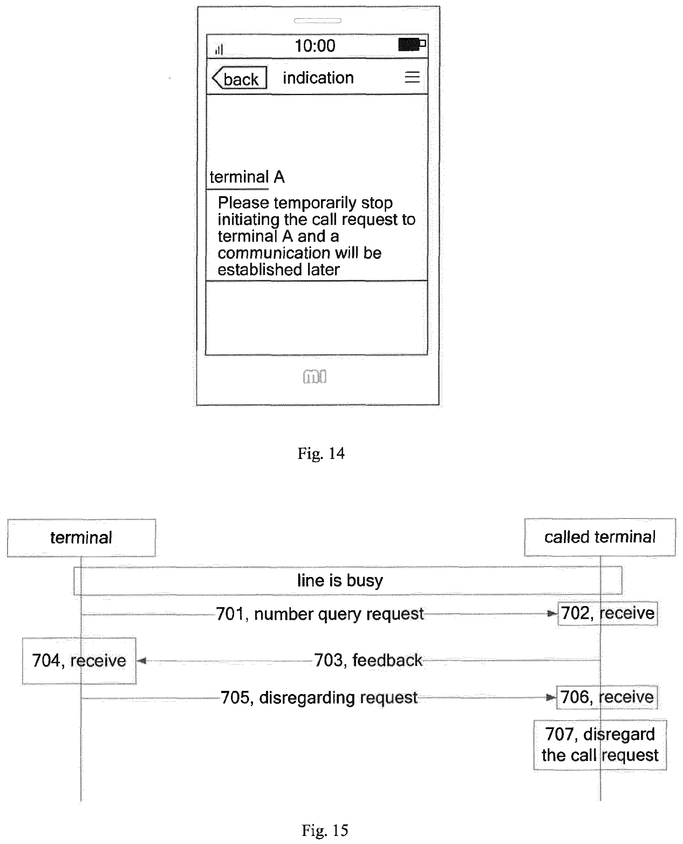

The disregarding request sent by the terminal is displayed in the called terminal, as illustrated in Fig. 14.

In this way, after the call request initiated by the called terminal is disregarded, the terminal may be connected with the called terminal normally, such that a communication may be conducted under a normal procedure.

As described above, with the method for handling a busy line according to embodiments of the present disclosure, a terminal sends a number query request to a server and receives a feedback sent by the server according to the number query request, and then sends a connecting request to the server according to the feedback or sends a disregarding request to disregard a call request initiated by a called terminal so as to establish a communication. Thus, the problem that a line is busy when two terminals initiate call requests to each other may be solved, such that if two terminals initiate call requests to each other, an effect of connecting the two terminals by the server or disregarding a call request initiated by the called terminal may be achieved.

Fig. 15 is a schematic diagram illustrating a process of another method for handling a busy line according to another exemplary embodiment of the present disclosure. In this embodiment, take the method for handling a busy line being applied in the server illustrated in Fig. 1 for example. The method for handling a busy line may include the following steps.

In step 701, a number query request is sent by a terminal to a called terminal when the called terminal is in a busy state.

The number query request is sent by the terminal in two different ways to the called terminal.

Firstly, the number query request is sent by the terminal to the called terminal through a server.

Secondly, the number query request is directly sent by the terminal to the called terminal.

In step 702, the number query request sent by the terminal is received by the called terminal.

Correspondingly, the number query request sent by the terminal is received by the called terminal in two different ways.

Firstly, the number query request sent by the terminal is received by the called terminal through the server.

Secondly, the number query request sent by the terminal is directly received by the called terminal.

In step 703, a feedback is sent by the called terminal to the terminal according to a call request initiated by the called terminal.

This step may include two different implementations as follows.

Firstly, a number in the call request initiated by the called terminal is sent by the called terminal by carrying the number in the feedback to terminal directly or to the terminal through the server.

Secondly, whether the number in the call request initiated by the called terminal is a number of the terminal is detected by the called terminal, and a detect result is sent to the terminal by carrying the detect result in the feedback directly or through the server.

In step 704, a feedback on the number query request sent by the called terminal is received by the terminal.

This step may include three different implementations.

Firstly, if the number query request is sent by the terminal to the called terminal through the server, the feedback carrying a detect result sent by the server is received by the terminal, the detect result is obtained by the called terminal after detecting whether the number in the call request initiated by the called terminal is the number of the terminal.

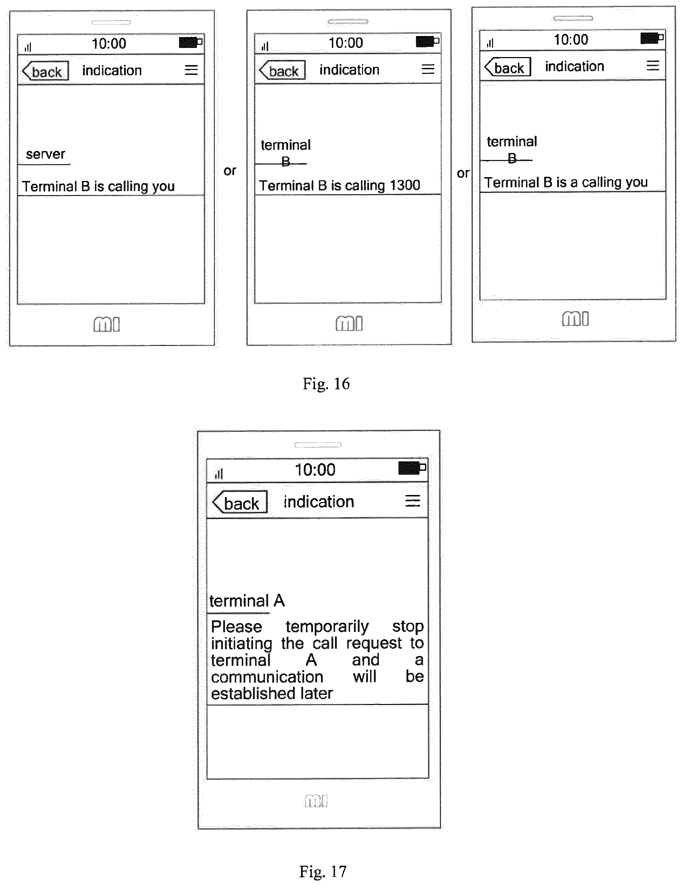

For example, terminal A receives a feedback carrying a detect result sent by the server. Assuming that the server obtains the detect result by detecting the called number of terminal B. If the detect result indicates that terminal B is calling terminal A, the feedback received by terminal A indicates: terminal B is calling you. The feedback sent by the server is displayed in terminal A, as illustrated on the left of Fig. 16.

Secondly, if the number query request is directly sent to the called terminal, the feedback sent by the called terminal is received by the terminal, in which the feedback carries the number in the call request initiated by the called terminal.

For example, terminal A receives the called number of terminal B sent by the server. Assuming that the number of terminal A is 1300, if the called number of terminal B is the number of terminal A, the feedback from terminal B received by terminal A indicates: terminal B is calling 1300. The feedback sent by the server is displayed in terminal A, as illustrated in a middle of Fig. 16.

Thirdly, if the number query request is directly sent to the called terminal, the feedback carrying a detect result sent by the called terminal is received by the terminal, in which the detect result is obtained by the server or the called terminal after detecting whether the number in the call request initiated by the called terminal is the number of the terminal.

For example, terminal A receives a feedback carrying a detect result sent by terminal B. Assuming that terminal B obtains the detect result by detecting the called number of terminal B. If the detect result indicates that terminal B is calling terminal A, the feedback received by terminal A indicates: terminal B is calling you. The feedback sent by the server is displayed in terminal A, as illustrated on the right of Fig. 16.

In step 705, a disregarding request is sent by the terminal to the called terminal.

The disregarding request is used for requesting to disregard the call request initiated by the called terminal.

In step 706, the disregarding request sent by the terminal is received by the called terminal, the disregarding request is sent by the terminal to the called terminal if the feedback indicates that the called terminal is calling the terminal.

A diagram (i.e. Fig. 17) illustrating a disregarding indicating message being displayed in terminal B is provided in this embodiment. Terminal B displays the disregarding indicating message sent by terminal A. The disregarding indicating message may be a message indicating "Please temporarily stop initiating the call request to terminal A, and a communication will be established later". Terminal B stops initiating the call request to terminal A according to the disregarding indicating message.

In step 707, the call request initiated by the called terminal is disregarded according to the disregarding request.

In this way, after the call request initiated by the called terminal is disregarded, the terminal may be connected with the called terminal normally, such that a communication may be conducted under a normal procedure.

This embodiment differs from that shown in Figs. 9-14 in that a number query request and a disregarding request may be directly sent between the terminal and the called terminal, such that a real-time communication between two terminals may be implemented, i.e. a communication between a terminal and another terminal may be established through a network.

As described above, with the method for handling a busy line according to embodiments of the present disclosure, a terminal sends a number query request to a called terminal and receives a feedback sent by the called terminal according to the number query request, and then sends a disregarding request to the called terminal according to the feedback to disregard a call request initiated by the called terminal so as to establish a communication. Thus, the problem that a line is busy caused by the fact that two terminals initiate call requests to each other may be solved, such that if two terminals initiate call requests to each other, a real-time communication between two terminals may be implemented by disregarding the call request initiated by the called terminal.

The method for handling a busy line according to embodiments of the present disclosure merely takes two phone terminals communicating with each other as an example for description. The method may also be applied to a network communication, as long as the method for handling a busy line according to embodiments of the present disclosure may be realized. The present disclosure is not limited thereby.

The embodiments providing a device of the present disclosure are as follows. The device is used to implement the method according to the embodiments of the present disclosure. Concerning the details which are not described in the embodiments of the device, reference is made to the embodiments of the method.

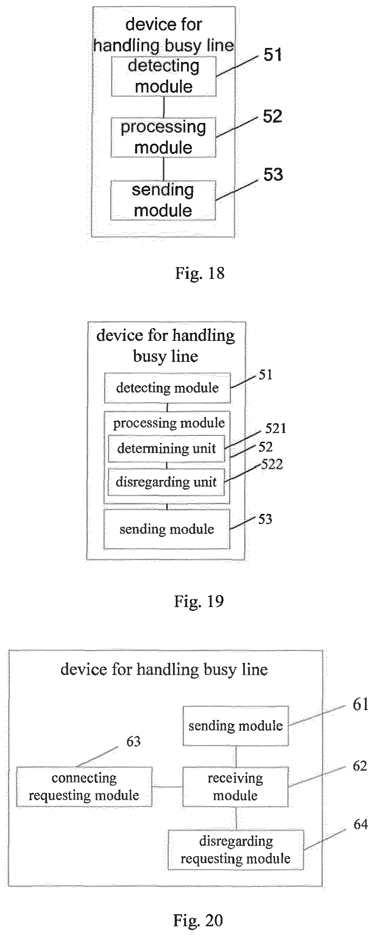

Fig. 18 is a block diagram of a device for handling a busy line according to an exemplary embodiment of the present disclosure. The device may be all or a part of a server by hardware, software or combinations thereof. The device for handling a busy line may include a detecting module 51, a processing module 52 and a sending module 53.

The detecting module 51 is configured for detecting whether a first terminal initiates a first call request to a second terminal and the second terminal initiates a second call request to the first terminal.

The processing module 52 is configured for connecting the first terminal with the second terminal, or disregarding the first call request initiated by the first terminal or the second call request initiated by the second terminal, if is the detecting module 51 detects that the first terminal initiates the first call request to the second terminal and the second terminal initiates the second call request to the first terminal.

Alternatively, the detecting module 51 is further configured for detecting whether a number in the first call request initiated by the first terminal is a number of the second terminal, and whether a number in the second call request initiated by the second terminal is a number of the first terminal.

Alternatively, referring to Fig. 19, the processing module 52 includes: a determining unit 521, configured for determining between the first call request and the second call request whose initiating time is later according to the initiating time of the first call request and the initiating time of the second call request; a disregarding unit 522, configured for disregarding the call request whose initiating time is later.

Further, the device for handling a busy line further includes:
a sending module 53, configured for sending a disregarding indicating message to the first terminal after the first call request initiated by the first terminal is disregarded by the processing module 52, in which the disregarding indicating message is used for indicating the first terminal does not continue initiating the first call request; or
the sending module 53, configured for sending a disregarding indicating message to the second terminal after the second call request initiated by the second terminal is disregarded by the processing module 52, in which the disregarding indicating message is used for indicating the second terminal does not continue initiating the second call request.

As described above, with the device for handling a busy line according to embodiments of the present disclosure, a first terminal is connected with a second terminal or a first call request initiated by the first terminal or a second call request initiated by the second terminal is disregarded, if it is detected that the first terminal initiates the first call request to the second terminal and the second terminal initiates the second call request to the first terminal. Thus, the problem that a line is busy caused by the fact that two terminals initiate call requests to each other is solved, such that if two terminals initiates call requests to each other, a waste of time in calling each other by two terminals may be avoided by connecting the two terminals by a server or disregarding a call request initiated by one of the two terminals by the server, thus saving time and improving the efficiency.

Fig. 20 is a block diagram of a device for handling a busy line according to another exemplary embodiment of the present disclosure. The device may be all or a part of a terminal by hardware, software or combinations thereof. The device for handling a busy line may include a sending module 61, a receiving module 62, a connecting requesting module 63 and a disregarding requesting module 64.

The sending module 61 is configured for sending a number query request when a called terminal is in a busy state.

The receiving module 62 is configured for receiving a feedback on the number query request, in which the feedback is provided according to a call request initiated by the called terminal.

The connecting requesting module 63 is configured for sending a connecting request to a server if the feedback indicates the called terminal is calling a terminal, in which the connecting request is used for requesting the server to connect the terminal with the called terminal, or the disregarding requesting module 64 is configured for sending a disregarding request to the server or the called terminal, in which the disregarding request is used for requesting to disregard the call request initiated by the called terminal.

Alternatively, the receiving module 62 is further configured for receiving the feedback sent by the server if the number query request is sent to the server, in which the feedback carries a number in the call request initiated by the called terminal; or
the receiving module 62 is further configured for receiving the feedback carrying a detect result sent by the server if the number query request is sent to the server, in which the detect result is obtained by the server after detecting whether the number in the call request initiated by the called terminal is a number of the terminal; or
the receiving module 62 is further configured for receiving the feedback carrying a detect result sent by the server if the number query request is sent to the called terminal through the server, in which the detect result is obtained by the called terminal after detecting whether the number in the call request initiated by the called terminal is the number of the terminal; or
the receiving module 62 is further configured for receiving the feedback sent by the called terminal if the number query request is directly sent to the called terminal, in which the feedback carries the number in the call request initiated by the called terminal; or
the receiving module 62 is further configured for receiving the feedback carrying a detect result sent by the called terminal if the number query request is directly sent to the called terminal, in which the detect result is obtained by the server or the called terminal after detecting whether the number in the call request initiated by the called terminal is the number of the terminal.

As described above, with the device for handling a busy line according to embodiments of the present disclosure, a terminal sends a number query request to a server and receives a feedback sent by the server according to the number query request, and then sends a connecting request to the server according to the feedback to request to establish a communication. Thus, the problem that a line is busy caused by the fact that two terminals initiate call requests to each other is solved, such that if two terminals initiate call requests to each other, the two terminals may be connected by the server or a call request initiated by a called terminal may be disregarded. Moreover, the terminal may detect whether a call number of the called terminal is a number of the terminal by a number query request, and if the called terminal is not calling the terminal, the terminal may be hung up according to the feedback sent by the server, thus saving time.

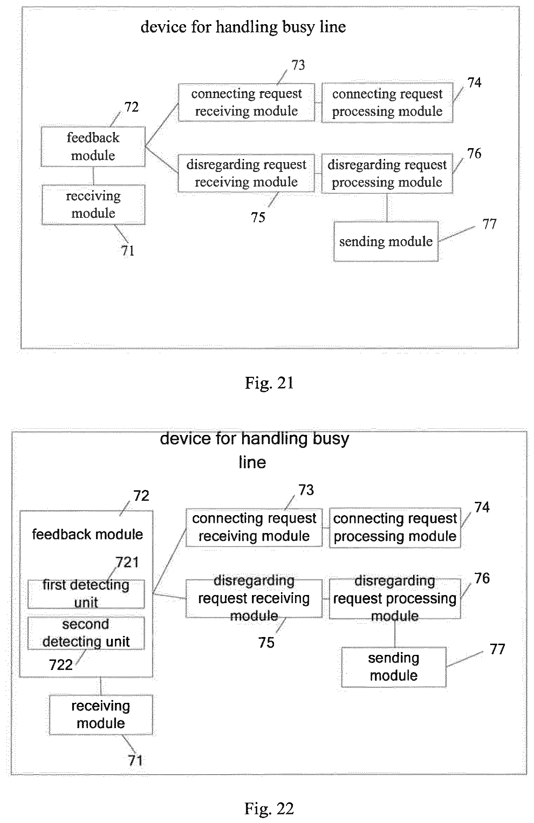

Fig. 21 is a block diagram of another device for handling a busy line according to another exemplary embodiment of the present disclosure. The device may be all or a part of a server by hardware, software or combinations thereof. The device for handling a busy line may include a receiving module 71, a feedback module 72, a connecting request receiving module 73, a connecting request processing module 74, a disregarding request receiving module 75, a disregarding request processing module 76 and a sending module 77.

The receiving module 71 is configured for receiving a number query request sent by a terminal, in which the number query request is sent by the terminal when a called terminal is in a busy state.

The feedback module 72 is configured for sending a feedback to the terminal according to a call request initiated by the called terminal, in which the feedback is used for triggering the terminal to send a connecting request to a server if the feedback indicates that the called terminal is calling the terminal, in which the connecting request is used for requesting the server to connect the terminal with the called terminal; or sending a disregarding request to the server or the called terminal, in which the disregarding request is used for requesting to disregard the call request initiated by the called terminal.

Alternatively, as shown in Fig. 22, the feedback module 72 further includes:
a first feedback unit 721, configured for sending a number in the call request initiated by the called terminal by carrying the number in the feedback to the terminal; or
a second feedback unit 722, configured for detecting whether the number in the call request initiated by the called terminal is a number of the terminal, and for sending a detect result by carrying the detect result in the feedback to the terminal.

Alternatively, the device for handling a busy line further includes:
a connecting request receiving module 73, configured for receiving a connecting request sent by the terminal, in which the connecting request is sent to the server by the terminal if the feedback indicates that the called terminal is calling the terminal;
a connecting request processing module 74, configured for connecting the terminal with the called terminal according to the connecting request received by the connecting request receiving module 73.

Alternatively, the device for handling a busy line further includes:
a disregarding request receiving module 75, configured for receiving a disregarding request sent by the terminal, in which the disregarding request is sent to the server by the terminal if the feedback indicates that the called terminal is calling the terminal;
a disregarding request processing module 76, configured for disregarding the call request initiated by the called terminal according to the disregarding request received by the disregarding request receiving module 75.

Alternatively, the device for handling a busy line further includes: a sending module 77, configured for sending a disregarding indicating message to the called terminal after the call request initiated by the called terminal is disregarded by the disregarding request processing module 76, in which the disregarding indicating message is used for indicating the called terminal does not continue initiating the call request.

As described above, with the device for handling a busy line according to embodiments of the present disclosure, a terminal sends a number query request to a server and receives a feedback sent by the server according to the number query request, and then sends a disregarding request to the server or a called terminal if the feedback indicates that the called terminal is calling the terminal. Thus, the problem that a line is busy caused by the fact that two terminals initiate call requests to each other is solved, such that if two terminals initiate call requests to each other, an effect of connecting the two terminals by the server or disregarding a call request initiated by one of the two terminals so as to connect the two terminals may be achieved.

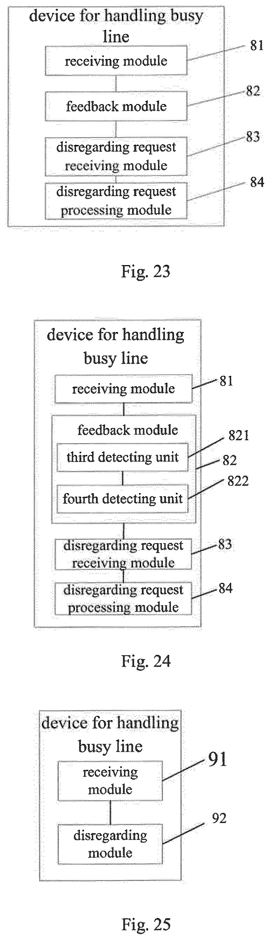

Fig. 23 is a block diagram of another device for handling a busy line according to another exemplary embodiment of the present disclosure. The device may be all or a part of a called terminal by hardware, software or combinations thereof. The device for handling a busy line may include a receiving module 81, a feedback module 82, a disregarding request receiving module 83 and a disregarding request processing module 84.

The receiving module 81 is configured for receiving a number query request sent by a terminal, in which the number query request is sent by the terminal when a called terminal is in a busy state.

The feedback module 82 is configured for sending a feedback to the terminal according to a call request initiated by the called terminal, in which the feedback is used for triggering the terminal to send a connecting request to a server if the feedback indicates that the called terminal is calling the terminal, and the connecting request is used for requesting the server to connect the terminal with the called terminal; or sending a disregarding request to the server or the called terminal, in which the disregarding request is used for requesting to disregard the call request initiated by the called terminal.

Alternatively, referring to Fig. 24, the feedback module 82 includes:
a third feedback unit 821, configured for sending a number in the call request initiated by the terminal by carrying the number in the feedback to the terminal directly or to the terminal through the server; or
a fourth feedback unit 822, configured for detecting whether the number in the call request initiated by the called terminal is a number of the terminal, and for sending a detect result by carrying the detect result in the feedback to the terminal or to the terminal through the server.

Further, the disregarding request receiving module 83 is configured for receiving a disregarding request sent by the terminal, in which the disregarding request is sent to the called terminal by the terminal if the feedback indicates that the called terminal is calling the terminal.

The disregarding request processing module 84 is configured for disregarding the call request according to the disregarding request received by the disregarding request receiving module 83.

As described above, with the device for handling a busy line according to embodiments of the present disclosure, a terminal sends a number query request to a called terminal and receives a feedback sent by the called terminal according to the number query request, and then sends a disregarding request to the called terminal according to the feedback to disregard a call request initiated by the called terminal so as to establish a communication. Thus, the problem that a line is busy caused by the fact that two terminals initiate call requests to each other is solved, such that if two terminals initiate call requests to each other, an effect of disregarding the call request initiated by the called terminal so as to implement a real-time communication between the two terminals may be achieved.

Fig. 25 is a schematic diagram of a device for handling a busy line according to still another exemplary embodiment of the present disclosure. The device may be all or a part of a called terminal by hardware, software or combinations thereof. The device for handling a busy line may include a receiving module 91, and a disregarding module 92.

The receiving module 91 is configured for receiving a disregarding request sent by a terminal, in which the disregarding request is sent to a called terminal by the terminal if a feedback received by the terminal from a server indicates that the called terminal is calling the terminal, in which the feedback is on a number query request which is sent to the server by the terminal if the called terminal is in a busy state.

The disregarding module 92 is configured for disregarding the call request according to the disregarding request received by the receiving module 91.

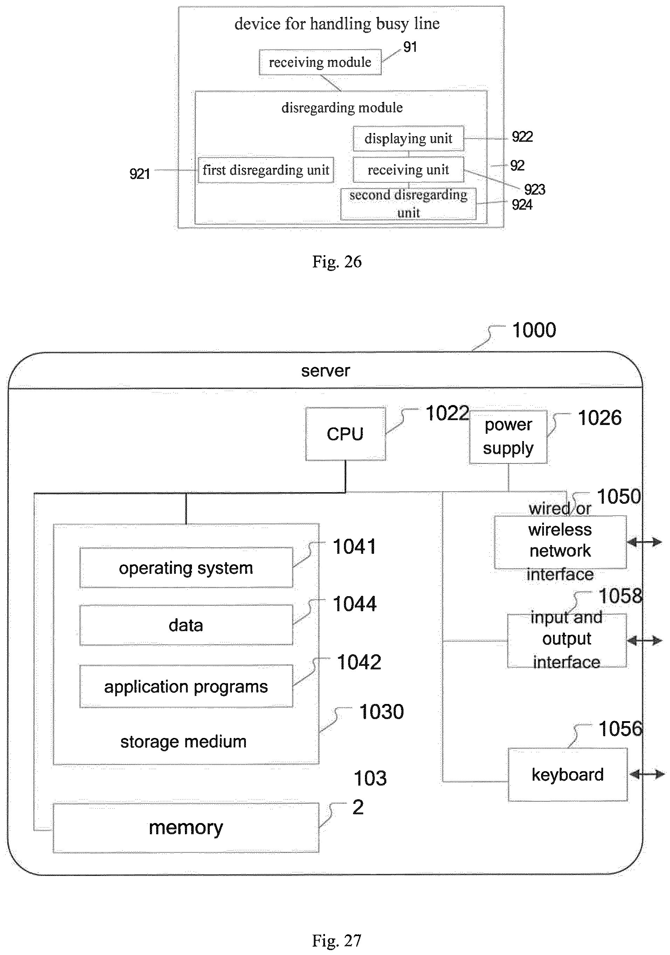

Alternatively, referring to Fig. 26, the disregarding module 92 includes:
a first disregarding unit 921, configured for disregarding the call request automatically if the disregarding request is received; or
a displaying unit 922, configured for displaying the disregarding request if the disregarding request is received; a receiving unit 923, configured for receiving a feedback signal on the disregarding request; a second disregarding unit 924, configured for disregarding the call request according to the feedback signal received by the receiving unit 923.

As described above, with the device for handling a busy line according to embodiments of the present disclosure, a terminal sends a number query request to a server and receives a feedback sent by the server according to the number query request, and then sends a disregarding request to a called terminal if the feedback indicates the called terminal is calling the terminal, such that the called terminal disregards a call request according to disregarding request; or the called terminal displays the disregarding request and receives a feedback signal corresponding to the disregarding request, and then disregards the call request according to the feedback signal. Thus, the problem that a line is busy caused by the fact that two terminals initiate call requests to each other is solved, and an effect of handling a call collision by disregarding the call request initiated by the called terminal, establishing a communication and saving initiating time of the two terminals may be achieved.

With respect to the devices in the above embodiments, the specific manners for performing operations for individual modules therein have been described in detail in the embodiments regarding the methods for handling a busy line, which are not elaborated herein again.

Fig. 27 is a schematic diagram of a server according to an exemplary embodiment of the present disclosure. The server 1000 may vary widely in configuration or capabilities, but it may include one or more central processing units (CPU) 1022 (such as one or more processors) and a memory 1032, one or more storage mediums 1030 (such as one or more mass storage devices) for storing application programs 1042 or data 1044. The memory 1032 and the storage mediums 1030 may be transitory or non-transitory. The application programs stored in the storage mediums 1030 may include one or more modules (not shown), each module may include a series of instructions for the server. Furthermore, the central processing unit 1022 may be configured to communicate with the storage medium 1030 to execute the series of instructions stored in the storage medium 1030 on the server 1000.

The server 1000 may further include one or more power supplies 1026, one or more wired or wireless network interfaces 1050, one or more input and output interfaces 1058, one or more keyboards 1056 and/or one or more operating systems 1041, such as Windows ServerTM, Mac OS XTM, UnixTM, LinuxTM, FreeBSDTM and so on.

When instructions in the storage medium 1030 are executed by a processor of the server 1000, the server 1000 may execute the method for handling a busy line according to above embodiments of the present disclosure.

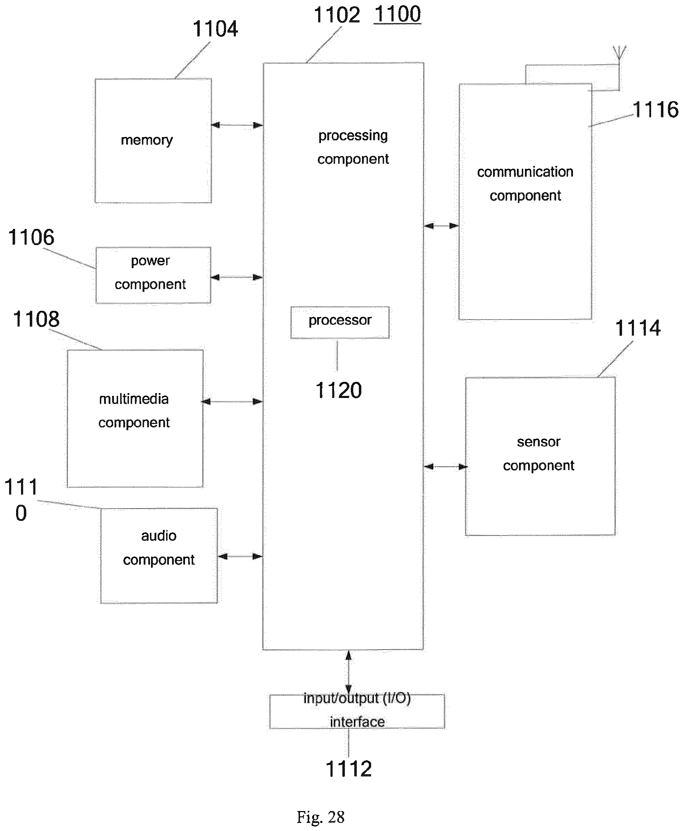

Fig. 28 is a schematic diagram of a terminal 1100 according to an exemplary embodiment of the present disclosure. For example, the terminal 1100 may be a mobile phone, a computer, a digital broadcasting terminal, a message receiving and sending equipment, a game controller, a tablet device, a medical equipment, a fitness equipment, a PDA and so on.

Referring to Fig. 28, the terminal 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the terminal 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the terminal 1100. Examples of such data include instructions for any applications or methods operated on the terminal 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the terminal 1100. The power component 1106 may include a power management system, one or more power sources, and any other components associated with the generation, management, and distribution of power in the terminal 1100.

The multimedia component 1108 includes a screen providing an output interface between the terminal 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 1108 includes a front camera and/or a rear camera. The front camera and the rear camera may receive an external multimedia datum while the terminal 1100 is in an operation mode, such as a photographing mode or a video mode. Each of the front camera and the rear camera may be a fixed optical lens system or have focus and optical zoom capability.

The audio component 1110 is configured to output and/or input an audio signal. For example, the audio component 1110 includes a microphone ("MIC") configured to receive an external audio signal when the terminal 1100 is in an operation mode, such as a call mode, a recording mode, and a voice recognition mode. The received audio signal may be further stored in the memory 1104 or transmitted via the communication component 1116. In some embodiments, the audio component 1110 includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the terminal 1100. For instance, the sensor component 1114 may detect an opened/closed status of the terminal 1100, relative positioning of components (e.g., the display and the keypad) of the terminal 1100, a change in position of the terminal 1100 or a component of the terminal 1100, a presence or absence of user contact with the terminal 1100, an orientation or an acceleration/deceleration of the terminal 1100, and a change in temperature of the terminal 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate wired or wireless communication between the terminal 1100 and other devices. The terminal 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods according to embodiments of the present disclosure.

In exemplary embodiments, there is also provided a non-transitory computer-readable storage medium including instructions, such as the memory 1104 including instructions, and the instructions are executable by the processor 1120 of the terminal 1100, for performing the above-described methods. For example, the non-transitory computer-readable storage medium may be a ROM, a RAM (random access memory), a CD-ROM, a magnetic tape, a floppy disc, an optical data storage device, and the like.

A non-temporary computer-readable storage medium is provided. When instructions in the storage medium is executed by the processor of the terminal 1100, the terminal 1100 may implement the method for handling a busy line according to the above embodiments of the present disclosure.

Other embodiments of the disclosure will be apparent to those skilled in the art from consideration of the specification and practice of the disclosure indicated by the following claims.

It will be appreciated that the present disclosure is not limited to the exact construction that has been described above and illustrated in the accompanying drawings, and that various modifications and changes can be made without departing from the scope as defined by the appended claims.

## Claims

1. A method for handling a busy line performed on a terminal, comprising:
sending a number query request from the terminal when a called terminal is in a busy state;
receiving, by the terminal, a feedback from a server or the called terminal on the number query request, wherein the feedback is provided according to a call request initiated by the called terminal;
if the feedback indicates the called terminal is calling the terminal, sending a disregarding request to the called terminal, wherein the disregarding request is used for requesting to disregard the call request initiated by the called terminal.

2. The method according to claim 1, wherein the step of receiving, by the terminal, a feedback on the number query request comprises:
receiving the feedback sent by the server if the number query request is sent to the server, wherein the feedback carries a number in the call request initiated by the called terminal; or
receiving the feedback carrying a detect result sent by the server if the number query request is sent to the server, wherein the detect result is obtained by the server after detecting whether the number in the call request initiated by the called terminal is a number of the terminal; or
receiving the feedback carrying a detect result sent by the server if the number query request is sent to the called terminal through the server, wherein the detect result is obtained by the called terminal after detecting whether the number in the call request initiated by the called terminal is the number of the terminal; or
receiving the feedback sent by the called terminal if the number query request is directly sent to the called terminal, wherein the feedback carries the number in the call request initiated by the called terminal; or
receiving the feedback carrying a detect result sent by the called terminal if the number query request is directly sent to the called terminal, wherein the detect result is obtained by the server or the called terminal after detecting whether the number in the call request initiated by the called terminal is the number of the terminal.

3. A method for handling a busy line performed on a server or a called terminal, comprising:
receiving, by the server or the called terminal, a number query request sent by a terminal, wherein the number query request is sent by the terminal when a called terminal is in a busy state;
sending, by the server or the called terminal, a feedback to the terminal according to a call request initiated by the called terminal, wherein the feedback is used for triggering the terminal to send a disregarding request to the called terminal, wherein the disregarding request is used for requesting to disregard the call request initiated by the called terminal.

4. The method according to claim 3, wherein the step of sending a feedback to the terminal according to a call request initiated by the called terminal comprises:
sending, by the server or the called terminal, a number in the call request initiated by the called terminal by carrying the number in the feedback to the terminal; or
detecting, by the server or the called terminal, whether the number in the call request initiated by the called terminal is a number of the terminal, and sending a detect result by carrying the detect result in the feedback to the terminal.

5. The method according to claim 3 or 4, further comprising:
receiving a connecting request sent by the terminal, wherein the connecting request is sent to the server by the terminal if the feedback indicates that the called terminal is calling the terminal;
connecting the terminal with the called terminal according to the connecting request.

6. The method according to claim 3, wherein sending a feedback to the terminal according to a call request initiated by the called terminal comprises:
sending a number in the call request initiated by the terminal by carrying the number in the feedback to the terminal directly or to the terminal through the server; or
detecting whether the number in the call request initiated by the called terminal is a number of the terminal, and sending a detect result by carrying the detect result in the feedback to the terminal or to the terminal through the server.

7. The method according to claim 6, further comprising:
receiving a disregarding request sent by the terminal, wherein the disregarding request is sent to the called terminal by the terminal if the feedback indicates that the called terminal is calling the terminal;
disregarding the call request according to the disregarding request.

8. A device for handling a busy line for a terminal, comprising:
a sending module, configured for sending a number query request when a called terminal is in a busy state;
a receiving module, configured for receiving a feedback on the number query request, wherein the feedback is provided according to a call request initiated by the called terminal;
a disregarding requesting module, configured for sending a disregarding request to the server or the called terminal, wherein the disregarding request is used for requesting to disregard the call request initiated by the called terminal.

9. A device for handling a busy line for a server or a called terminal, comprising:
a receiving module, configured for receiving a number query request sent by a terminal, wherein the number query request is sent by the terminal when a called terminal is in a busy state;
a feedback module, configured for sending a feedback to the terminal according to a call request initiated by the called terminal, wherein the feedback is used for triggering the terminal to send a disregarding request to the server or the called terminal, wherein the disregarding request is used for requesting to disregard the call request initiated by the called terminal.

10. A communication system, comprising: a server, a terminal and a called terminal, the server being connected to the terminal and the called terminal respectively, wherein,
the terminal comprises a device configured to handle a busy line according to the method in claim 1; the server comprises a device further comprising a receiving module, configured for receiving a number query request sent by a terminal, wherein the number query request is sent by the terminal when the called terminal is in a busy state; a feedback module, configured for sending a feedback to the terminal according to a call request initiated by the called terminal, wherein the feedback is used for triggering the terminal to send a disregarding request to the server, wherein the disregarding request is used for requesting to disregard the call request initiated by the called terminal; and
the called terminal comprises a device further comprising a receiving module, configured for receiving a disregarding request sent by a terminal;wherein the disregarding request is sent to the called terminal by the terminal if a feedback received by the terminal from a server indicates that the called terminal is calling the terminal, in which the feedback is on a number query request which is sent to the server by the terminal if the called terminal is in a busy state;a disregarding module, configured for disregarding the call request according to the disregarding request received by the receiving module.

## Patentansprüche

1. Verfahren zur Handhabung einer besetzten Leitung, das an einem Endgerät durchgeführt wird und Folgendes aufweist:
Senden einer Nummernabfrageanforderung von dem Endgerät, wenn ein angerufenes Endgerät in einem besetzten Zustand ist;
durch das Endgerät Empfangen eines Feedbacks von einem Server oder dem angerufenen Endgerät über die Nummernabfrageanforderung, wobei das Feedback gemäß einer von dem angerufenen Endgerät eingeleiteten Anrufanforderung bereitgestellt wird;
wenn das Feedback anzeigt, dass das angerufene Endgerät das Endgerät anruft, Senden einer Nichtbeachtungsanforderung an das angerufene Endgerät, wobei die Nichtbeachtungsanforderung zum Anfordern einer Nichtbeachtung der durch das angerufene Endgerät eingeleiteten Anrufanforderung verwendet wird.

2. Verfahren nach Anspruch 1, wobei der Schritt des Empfangens eines Feedbacks über die Nummernabfrageanforderung durch das Endgerät Folgendes aufweist:
Empfangen des durch den Server gesendeten Feedbacks, wenn die Nummernabfrageanforderung an den Sender gesendet wird, wobei das Feedback eine Nummer in der durch das angerufene Endgerät eingeleiteten Anrufanforderung trägt; oder
Empfangen des Feedbacks, das ein durch den Server gesendetes Erkennungsergebnis trägt, wenn die Nummernabfrageanforderung an den Server gesendet wird, wobei das Erkennungsergebnis durch den Server nach Erkennen, ob die Nummer in der durch das angerufene Endgerät eingeleiteten Anrufanforderung eine Nummer des Endgeräts ist, ermittelt wird; oder
Empfangen des Feedbacks, das ein durch den Server gesendetes Erkennungsergebnis trägt, wenn die Nummernabfrageanforderung durch den Server an das angerufene Endgerät gesendet wird, wobei das Erkennungsergebnis durch das angerufene Endgerät nach Erkennen, ob die Nummer in der durch das angerufene Endgerät eingeleiteten Anrufanforderung die Nummer des Endgeräts ist, ermittelt wird; oder
Empfangen des durch das angerufene Endgerät gesendeten Feedbacks, wenn die Nummernabfrageanforderung direkt an das angerufene Endgerät gesendet wird, wobei das Feedback die Nummer in der durch das angerufene Endgerät eingeleiteten Anrufanforderung trägt; oder
Empfangen des Feedbacks, das ein durch das angerufene Endgerät gesendetes Erkennungsergebnis trägt, wenn die Nummernabfrageanforderung direkt an das angerufene Endgerät gesendet wird, wobei das Erkennungsergebnis durch den Server oder das angerufene Endgerät nach Erkennen, ob die Nummer in der durch das angerufene Endgerät eingeleiteten Anrufanforderung die Nummer des Endgeräts ist, ermittelt wird.

3. Verfahren zur Handhabung einer besetzten Leitung, das an einem Server oder einem angerufenen Endgerät durchgeführt wird und Folgendes aufweist:
durch den Server oder das angerufene Endgerät Empfangen einer durch ein Endgerät gesendeten Nummernabfrageanforderung, wobei die Nummernabfrageanforderung durch das Endgerät gesendet wird, wenn ein angerufenes Endgerät in einem besetzten Zustand ist;
durch den Server oder das angerufene Endgerät Senden eines Feedbacks an das Endgerät gemäß einer durch das angerufene Endgerät eingeleiteten Anrufanforderung, wobei das Feedback zum Auslösen des Endgeräts zum Senden einer Nichtbeachtungsanforderung an das angerufene Endgerät verwendet wird, wobei die Nichtbeachtungsanforderung zum Anfordern der Nichtbeachtung der durch das angerufene Endgerät eingeleiteten Anrufanforderung verwendet wird.

4. Verfahren nach Anspruch 3, wobei der Schritt des Sendens eines Feedbacks an das Endgerät gemäß einer durch das angerufene Endgerät eingeleiteten Anrufanforderung Folgendes aufweist:
durch den Server oder das angerufene Endgerät Senden einer Nummer in der durch das angerufene Endgerät eingeleiteten Anrufanforderung durch Tragen der Nummer im Feedback an das Endgerät; oder
durch den Server oder das angerufene Endgerät Erkennen, ob die Nummer in der durch das angerufene Endgerät eingeleiteten Anrufanforderung eine Nummer des Endgeräts ist, und Senden eines Erkennungsergebnisses durch Tragen des Erkennungsergebnisses im Feedback an das Endgerät.

5. Verfahren nach Anspruch 3 oder 4, das ferner Folgendes aufweist:
Empfangen einer durch das Endgerät gesendeten Verbindungsanforderung, wobei die Verbindungsanforderung durch das Endgerät an den Server gesendet wird, wenn das Feedback anzeigt, dass das angerufene Endgerät das Endgerät anruft;
Verbinden des Endgeräts mit dem angerufenen Endgerät gemäß der Verbindungsanforderung.

6. Verfahren nach Anspruch 3, wobei das Senden von Feedback an das Endgerät gemäß einer durch das angerufene Endgerät eingeleiteten Anrufanforderung Folgendes aufweist:
Senden einer Nummer in der durch das Endgerät eingeleiteten Anrufanforderung durch Tragen der Nummer im Feedback direkt an das Endgerät oder durch den Server an das Endgerät; oder
Erkennen, ob die Nummer in der durch das angerufene Endgerät eingeleiteten Anrufanforderung eine Nummer des Endgeräts ist, und Senden eines Erkennungsergebnisses durch Tragen des Erkennungsergebnisses im Feedback an das Endgerät oder durch den Server an das Endgerät.

7. Verfahren nach Anspruch 6, das ferner Folgendes aufweist:
Empfangen einer von dem Endgerät gesendeten Nichtbeachtungsanforderung, wobei die Nichtbeachtungsanforderung durch das Endgerät an das angerufene Endgerät gesendet wird, wenn das Feedback anzeigt, dass das angerufene Endgerät das Endgerät anruft;
Nichtbeachten der Anrufanforderung gemäß der Nichtbeachtungsanforderung.

8. Vorrichtung zur Handhabung einer besetzten Leitung für ein Endgerät, die Folgendes aufweist:
ein Sendemodul, das zum Senden einer Nummernabfrageanforderung, wenn ein angerufenes Endgerät in einem besetzten Zustand ist, konfiguriert ist;
ein Empfangsmodul, das zum Empfangen eines Feedbacks über die Nummernabfrageanforderung konfiguriert ist, wobei das Feedback gemäß einer von dem angerufenen Endgerät eingeleiteten Anrufanforderung bereitgestellt wird;
ein Nichtbeachtungsanforderungsmodul, das zum Senden einer Nichtbeachtungsanforderung an den Server oder das angerufene Endgerät konfiguriert ist, wobei die Nichtbeachtungsanforderung zum Anfordern einer Nichtbeachtung der durch das angerufene Endgerät eingeleiteten Anrufanforderung verwendet wird.

9. Vorrichtung zur Handhabung einer besetzten Leitung für einen Server oder ein angerufenes Endgerät, die Folgendes aufweist:
ein Empfangsmodul, das zum Empfangen einer durch das Endgerät gesendeten Nummernabfrageanforderung konfiguriert ist, wobei die Nummernabfrageanforderung durch das Endgerät gesendet wird, wenn ein angerufenes Endgerät in einem besetzten Zustand ist;
ein Feedbackmodul, das zum Senden eines Feedbacks an das Endgerät gemäß einer durch das angerufene Endgerät eingeleiteten Anrufanforderung konfiguriert ist, wobei das Feedback zum Auslösen des Endgeräts zum Senden einer Nichtbeachtungsanforderung an den Server oder das angerufene Endgerät verwendet wird, wobei die Nichtbeachtungsanforderung zum Anfordern der Nichtbeachtung der durch das angerufene Endgerät eingeleiteten Anrufanforderung verwendet wird.

10. Kommunikationssystem, das Folgendes aufweist: einen Server, ein Endgerät und ein angerufenes Endgerät, wobei der Server mit dem Endgerät bzw. dem angerufenen Endgerät verbunden ist, wobei
das Endgerät eine Vorrichtung aufweist, die zur Handhabung einer besetzten Leitung gemäß dem Verfahren nach Anspruch 1 konfiguriert ist; der Server eine Vorrichtung aufweist, die ferner aufweist: Empfangsmodul, das zum Empfangen einer durch ein Endgerät gesendeten Nummernabfrageanforderung konfiguriert ist, wobei die Nummernabfrageanforderung durch das Endgerät gesendet wird, wenn das angerufene Endgerät in einem besetzten Zustand ist; ein Feedbackmodul, das zum Senden eines Feedbacks an das Endgerät gemäß einer durch das angerufene Endgerät eingeleiteten Anrufanforderung konfiguriert ist, wobei das Feedback zum Auslösen des Endgeräts zum Senden einer Nichtbeachtungsanforderung an den Server verwendet wird, wobei die Nichtbeachtungsanforderung zum Anfordern der Nichtbeachtung der durch das angerufene Endgerät eingeleiteten Anrufanforderung verwendet wird; und
das angerufene Endgerät eine Vorrichtung aufweist, die ferner aufweist: ein Empfangsmodul, das zum Empfangen einer von einem Endgerät gesendeten Nichtbeachtungsanforderung konfiguriert ist; wobei die Nichtbeachtungsanforderung durch das Endgerät an das angerufene Endgerät gesendet wird, wenn ein durch das Endgerät von einem Server empfangenes Feedback anzeigt, dass das angerufene Endgerät das Endgerät anruft, bei dem das Feedback über eine Nummernabfrageanforderung ist, die durch das Endgerät an den Server gesendet wird, wenn das angerufene Endgerät in einem besetzten Zustand ist; ein Nichtbeachtungsmodul, das zum Nichtbeachten der Anrufanforderung gemäß der durch das Empfangsmodul empfangenen Nichtbeachtungsanforderung konfiguriert ist.

## Revendications

1. Procédé de traitement d'une ligne occupée effectué sur un terminal, comprenant :
envoyer une requête d'interrogation de numéro du terminal lorsqu'un terminal appelé est dans un état occupé ;
recevoir, par le terminal, une réaction d'un serveur ou du terminal appelé concernant la requête d'interrogation de numéro, où la réaction est fournie conformément à une requête d'appel lancée par le terminal appelé ;
si la réaction indique que le terminal appelé appelle le terminal, envoyer une requête d'ignorer au terminal appelé, où la requête d'ignorer est utilisée pour demander d'ignorer la requête d'appel lancée par le terminal appelé.

2. Procédé selon la revendication 1, dans lequel l'étape consistant à recevoir, par le terminal, une réaction concernant la requête d'interrogation de numéro comprend :
recevoir la réaction envoyée par le serveur si la requête d'interrogation de numéro est envoyée au serveur, où la réaction achemine un numéro dans la requête d'appel lancée par le terminal appelé ; ou bien
recevoir la réaction acheminant un résultat de détection envoyée par le serveur si la requête d'interrogation de numéro est envoyée au serveur, où le résultat de détection est obtenu par le serveur après avoir détecté si le numéro dans la requête d'appel lancée par le terminal appelé est un numéro du terminal ; ou bien
recevoir la réaction acheminant un résultat de détection envoyée par le serveur si la requête d'interrogation de numéro est envoyée au terminal appelé par le serveur, où le résultat de détection est obtenu par le terminal appelé après avoir détecté si le numéro dans la requête d'appel lancée par le terminal appelé est un numéro du terminal ; ou bien
recevoir la réaction envoyée par le terminal appelé si la requête d'interrogation de numéro est envoyée directement au terminal appelé, où la réaction achemine le numéro dans la requête d'appel lancée par le terminal appelé ; ou bien
recevoir la réaction acheminant un résultat de détection envoyée par le terminal appelé si la requête d'interrogation de numéro est envoyée directement au terminal appelé, où le résultat de détection est obtenu par le serveur ou le terminal appelé après avoir détecté si le numéro dans la requête d'appel lancée par le terminal appelé est le numéro du terminal.

3. Procédé de traitement d'une ligne occupée effectué sur un serveur ou un terminal appelé, comprenant :
recevoir, par le serveur ou le terminal appelé, une requête d'interrogation de numéro envoyée par un terminal, où la requête d'interrogation de numéro est envoyée par le terminal lorsqu'un terminal appelé est dans un état occupé ;
envoyer, par le serveur ou le terminal appelé, une réaction au terminal conformément à une requête d'appel lancée par le terminal appelé, où la réaction est utilisée pour déclencher l'envoi par le terminal d'une requête d'ignorer au terminal appelé, où la requête d'ignorer est utilisée pour demander d'ignorer la requête d'appel lancée par le terminal appelé.

4. Procédé selon la revendication 3, dans lequel l'étape consistant à envoyer une réaction au terminal conformément à une requête d'appel lancée par le terminal appelé, comprend :
envoyer, par le serveur ou le terminal appelé, un numéro dans la requête d'appel lancée par le terminal appelé en acheminant le numéro dans la réaction au terminal ; ou bien
détecter, par le serveur ou le terminal appelé, si le numéro dans la requête d'appel lancée par le terminal appelé est un numéro du terminal, et envoyer un résultat de détection en acheminant le résultat de détection dans la réaction au terminal.

5. Procédé selon la revendication 3 ou 4, comprenant en outre :
recevoir une requête de connexion envoyée par le terminal, où la requête de connexion est envoyée au serveur par le terminal si la réaction indique que le terminal appelé appelle le terminal ;
connecter le terminal avec le terminal appelé conformément à la requête de connexion.

6. Procédé selon la revendication 3, dans lequel envoyer une réaction au terminal conformément à une requête d'appel lancée par le terminal appelé, comprend :
envoyer un numéro dans la requête d'appel lancée par le terminal en acheminant le numéro dans la réaction directement au terminal ou bien au terminal via le serveur ; ou bien
détecter si le numéro dans la requête d'appel lancée par le terminal appelé est un numéro du terminal, et envoyer un résultat de détection en acheminant le résultat de détection dans la réaction au terminal ou bien au terminal via le serveur.

7. Procédé selon la revendication 6, comprenant en outre :
recevoir une requête d'ignorer envoyée par le terminal, où la requête d'ignorer est envoyée au terminal appelé par le terminal si la réaction indique que le terminal appelé appelle le terminal ;
ignorer la requête d'appel conformément à la requête d'ignorer.

8. Dispositif de traitement d'une ligne occupée pour un terminal, comprenant :
un module d'envoi, configuré pour envoyer une requête d'interrogation de numéro lorsqu'un terminal appelé est dans un état occupé ;
un module de réception, configuré pour recevoir une réaction concernant la requête d'interrogation de numéro, où la réaction est fournie conformément à une requête d'appel lancée par le terminal appelé ;
un module de requête d'ignorer, configuré pour envoyer une requête d'ignorer au serveur ou au terminal appelé, où la requête d'ignorer est utilisée pour demander d'ignorer la requête d'appel lancée par le terminal appelé.

9. Dispositif de traitement d'une ligne occupée pour un serveur ou un terminal appelé, comprenant :
un module de réception, configuré pour recevoir une requête d'interrogation de numéro envoyée par un terminal, où la requête d'interrogation de numéro est envoyée par le terminal lorsqu'un terminal appelé est dans un état occupé ;
un module de réaction, configuré pour envoyer une réaction au terminal conformément à une requête d'appel lancée par le terminal appelé, où la réaction est utilisée pour déclencher l'envoi par le terminal d'une requête d'ignorer au serveur ou au terminal appelé, où la requête d'ignorer est utilisée pour demander d'ignorer la requête d'appel lancée par le terminal appelé.

10. Système de communication, comprenant : un serveur, un terminal et un terminal appelé,
le serveur étant connecté au terminal et au terminal appelé respectivement, dans lequel :
le terminal comprend un dispositif configuré pour traiter une ligne occupée selon le procédé de la revendication 1 ;
le serveur comprend un dispositif comprenant en outre un module de réception, configuré pour recevoir une requête d'interrogation de numéro envoyée par un terminal, où la requête d'interrogation de numéro est envoyée par le terminal lorsque le terminal appelé est dans un état occupé ; un module de réaction, configuré pour envoyer une réaction au terminal conformément à une requête d'appel lancée par le terminal appelé, où la réaction est utilisée pour déclencher l'envoi par le terminal d'une requête d'ignorer au serveur, où la requête d'ignorer est utilisée pour demander d'ignorer la requête d'appel lancée par le terminal appelé ; et
le terminal appelé comprend un dispositif comprenant en outre un module de réception, configuré pour recevoir une requête d'ignorer envoyée par un terminal ; où la requête d'ignorer est envoyée au terminal appelé par le terminal si une réaction reçue par le terminal d'un serveur indique que le terminal appelé appelle le terminal, où la réaction concerne une requête d'interrogation de numéro qui est envoyée au serveur par le terminal si le terminal appelé est dans un état occupé ; un module d'ignorer, configuré pour ignorer la requête d'appel conformément à la requête d'ignorer reçue par le module de réception.
